# EUROPÄISCHE PATENTSCHRIFT

(11) **EP 2 523 277 B1**
(45) Veröffentlichungstag und Bekanntmachung des Hinweises auf die Patenterteilung: **04.01.2017**
(21) Anmeldenummer: 11165298.8
(22) Anmeldetag: 09.05.2011
(51) Int. Cl.: H01S 3/109, H01S 3/08

(54) **Laser-Resonator zur Erzeugung frequenzkonvertierter Laserstrahlung**
Laser resonator for generating frequency converted laser radiation
Résonateur laser pour la production d'un rayonnement à laser à fréquence convertie

(43) Veröffentlichungstag der Anmeldung: 14.11.2012
(73) Patentinhaber: Trumpf Laser Marking Systems AG, 7214 Grüsch (CH)
(72) Erfinder: Ziolek, Carsten, 7212 Seewis Dorf (CH); Joosten, Sven, 7235 Fideris (CH); Kruse, Dietmar, 7208 Malans (CH)
(74) Vertreter: Kohler Schmid Möbus Patentanwälte

(56) Entgegenhaltungen:
- WO-A2-2005/083851
- FR-A1- 2 788 893
- JP-A- 2 012 981
- JP-A- 3 233 986
- JP-A- 2001 320 114
- JP-A- 2003 008 121
- US-A- 4 637 026
- US-A- 4 885 752
- US-A- 5 130 997
- US-A- 5 255 275
- US-B1- 6 282 223
- REN Z ET AL: "532nm laser based on V-type doubly resonant intra-cavity frequency-doubling", OPTICS COMMUNICATIONS, NORTH-HOLLAND PUBLISHING CO. AMSTERDAM, NL, Bd. 282, Nr. 2, 15. Januar 2009 (2009-01-15), Seiten 263-266, XP025694524, ISSN: 0030-4018, DOI: 10.1016/J.OPTCOM.2008.09.033 [gefunden am 2008-11-26]
- PASK H M ET AL: "Wavelength-versatile visible and UV sources based on crystalline Raman lasers", PROGRESS IN QUANTUM ELECTRONICS, PERGAMON PRESS, OXFORD, GB, Bd. 32, Nr. 3-4, 1. Januar 2008 (2008-01-01), Seiten 121-158, XP025694851, ISSN: 0079-6727, DOI: 10.1016/J.PQUANTELEC.2008.09.001 [gefunden am 2008-09-25]

## Beschreibung

Die vorliegende Erfindung betrifft einen Laser-Resonator zur Erzeugung frequenzkonvertierter Laserstrahlung, umfassend: ein laseraktives Festkörpermedium sowie einen Wellenlängenumwandlungskristall, wobei in dem Laser-Resonator ein transmissives optisches Element mit einer konkav gekrümmten Fläche zur Erzeugung von kollimierter Laserstrahlung angeordnet ist.

Ein solcher Laser-Resonator zur Erzeugung von frequenzkonvertierter Laserstrahlung ist in der JP 3-233986 beschrieben.

Laser-Resonatoren zur resonatorinternen Erzeugung von frequenzkonvertierter Laserstrahlung weisen innerhalb des Laser-Resonators typischerweise einen Wellenlängenumwandlungskristall auf, in dem Laserstrahlung, welche in einem laseraktiven Medium bei einer Grundfrequenz bzw. -wellenlänge erzeugt wird, in Laserstrahlung mit einer typischer Weise höheren Frequenz umgewandelt wird. Als Wellenlängenumwandlungskristalle dienen nichtlineare Kristalle, beispielsweise LBO-Kristalle, welche eine Frequenzkonversion von der Grundfrequenz in eine höhere Harmonische, z.B. in die zweite oder dritte Harmonische erzeugen. Für eine ausreichend große Effizienz der Frequenzkonversion wird hierbei eine hohe Strahlintensität in dem nichtlinearen Kristall benötigt.

Um eine ausreichend große Strahlintensität in dem Wellenlängenumwandlungskristall zu erzeugen, ist es bekannt, den Strahlengang des Laser-Resonators so auszulegen, dass der Wellenlängenumwandlungskristall im Bereich einer Strahltaille angeordnet ist. Zur Erzeugung einer Stahltaille mit minimalem Strahldurchmesser kann beispielsweise der dem Wellenlängenumwandlungskristall benachbarte Endspiegel konkav ausgebildet werden, wie dies in der DE 100 03 244 A1 dargestellt ist. Wie dort ebenfalls beschrieben ist, wird durch den konkaven Endspiegel die Länge des Laser-Resonators erhöht, so dass dieser nicht in einer kompakten Bauform realisiert werden kann. Die DE 100 03 244 A1 schlägt daher vor, an Stelle eines konkaven Endspiegels einen konvexen Endspiegel zu verwenden, um dadurch die Resonator-Länge zu verkürzen und zusätzlich die Stabilität des Laser-Resonators zu erhöhen.

### Aufgabe der Erfindung

Es ist die Aufgabe der vorliegenden Erfindung, einen Laser-Resonator der eingangs genannten Art bereitzustellen, der bei einer kompakten Bauform eine effiziente Frequenzumwandlung ermöglicht.

### Gegenstand der Erfindung

Diese Aufgabe wird gelöst durch einen Laser-Resonator wie oben beschrieben, wobei das transmissive optische Element benachbart zu einem planen Endspiegel des Laser-Resonators angeordnet ist oder wobei eine weitere, plane Fläche des transmissiven optischen Elements eine reflektierende Beschichtung aufweist, die den Laser-Resonator endseitig begrenzt.

Das transmissive optische Element ermöglicht es, einen kollimierten Laserstrahl mit minimalem Strahldurchmesser in dem Laser-Resonator zu erzeugen, der an einer planen Begrenzungsfläche des Laser-Resonators in sich zurück reflektiert wird. Auf diese Weise kann ein Laser-Resonator mit kompakter Bauform realisiert werden, da auf das Erzeugen einer Strahltaille (Zwischenfokus) verzichtet werden kann. Insbesondere kann hierbei der Wellenlängenumwandlungskristall in der Nähe der planen Begrenzungsfläche des Laser-Resonators angeordnet werden, auf welche die kollimierte Strahlung trifft, um die Strahlintensität in dem nichtlinearen Medium und damit die Effizienz der Frequenzkonversion zu steigern. Unter der Formulierung "in der Nähe der Begrenzungsfläche" wird hierbei verstanden, dass der Wellenlängenumwandlungskristall näher zu derjenigen Begrenzungsfläche des Laser-Resonators angeordnet ist, auf welche die vom transmittierenden optischen Element kollimierte Laserstrahlung auftrifft, als zu einer zweiten, den Laser-Resonator am entgegengesetzten Ende begrenzenden Spiegelfläche.

Bei der oben beschriebenen ersten Alternative ist das transmissive optische Element benachbart zu einem planen Endspiegel des Laser-Resonators angeordnet, d.h. es befindet sich kein weiteres strahlformendes Element zwischen dem transmissiven optischen Element und dem planen Endspiegel. Hierdurch wird sichergestellt, dass der kollimierte Laserstrahl auf den planen Endspiegel trifft und an diesem in sich zurück reflektiert werden kann.

Bei der oben beschriebenen zweiten Alternative weist das transmissive optische Element eine weitere, plane Fläche mit einer hoch reflektiven Beschichtung auf, die den Laser-Resonator endseitig begrenzt. Die reflektive Beschichtung ersetzt den planen Endspiegel und ermöglicht somit eine besonders kompakte Bauweise des Laser-Resonators.

Bei einer weiteren Ausführungsform ist das transmissive optische Element eine Zerstreuungslinse. Die dem planen Endspiegel bzw. der hoch reflektiven Beschichtung abgewandte Linsen-Fläche ist hierbei konkav ausgebildet, um die von dem laseraktiven Festkörpermedium erzeugte thermische Linse zu kompensieren. Hierbei wird die Brennweite der Zerstreuungslinse in Abhängigkeit von der Dimensionierung des Laser-Resonators so festgelegt, dass eine gute Strahlqualität erhalten werden kann. Die Zerstreuungslinse kann hierbei zwischen dem Wellenlängenumwandlungskristall und dem Endspiegel bzw. einer endseitigen reflektiven Beschichtung angeordnet werden.

Alternativ ist es auch möglich, die Zerstreuungslinse zwischen dem laseraktiven Festkörpermedium und dem Wellenlängenumwandlungskristall anzuordnen. In diesem Fall ist der Wellenlängenumwandlungskristall im kollimierten Strahlengang zwischen der Zerstreuungslinse und dem Endspiegel bzw. der endseitigen reflektiven Beschichtung angeordnet, d.h. im Bereich des Resonators mit minimalem Strahldurchmesser.

In einer alternativen Ausführungsform ist das transmissive optische Element der Wellenlängenumwandlungskristall, d.h. eine Seitenfläche des Wellenlängenumwandlungskristalls weist eine konkave Krümmung auf. Wellenlängenumwandlungskristalle mit (konvex) gekrümmten Flächen sind beispielsweise in der US2009/0219958 beschrieben und werden dort verwendet, um Laserstrahlung mit der Grundfrequenz mehrmals in dem nichtlinearen Wellenlängenumwandlungskristall zu refilektieren. Im Gegensatz dazu wird bei der vorliegenden Erfindung die konkav gekrümmte Fläche dazu verwendet, die Laserstrahlung in dem Wellenlängenumwandlungskristall zu kollimieren und auf diese Weise einen minimalen Strahldurchmesser zu erhalten.

Bei einer Ausführungsform weist der Laser-Resonator einen (weiteren) planen Endspiegel auf, d.h. der Laser-Resonator wird durch zwei plane Spiegelflächen begrenzt. An dem planen Endspiegel wird ebenfalls ein kollimierter Laserstrahl in sich selbst zurück reflektiert, welcher einen größeren Durchmesser aufweist als der kollimierte Laserstrahl im Bereich des anderen, dem Wellenlängenumwandlungskristall benachbarten Ende des Laser-Resonators. Der (weitere) plane Endspiegel ist hierbei typischerweise benachbart zum laseraktiven Festkörpermedium angeordnet, d.h. es befindet sich kein weiteres strahlformendes Element zwischen dem planen Endspiegel und dem Festkörpermedium.

In einer Ausführungsform weist der Laser-Resonator ein Gütemodulationselement auf, um gepulste Laserstrahlung zu erzeugen. Als Gütemodulationselement kann ein akusto-optischer Modulator oder ggf. ein elektro-optischer Modulator, beispielsweise eine Pockels-Zelle, verwendet werden. Es versteht sich, dass auch auf ein Gütemodulationselement verzichtet werden kann, beispielsweise wenn der Laser-Resonator im "continuous wave" Modus betrieben werden soll.

Bei einer weiteren Ausführungsform umfasst der Laser-Resonator einen Auskoppelspiegel zum Auskoppeln der frequenzkonvertierten Laserstrahlung aus dem Laser-Resonator. Bei dem Auskoppelspiegel handelt es sich typischerweise um einen dichroitischen Spiegel, d.h. um einen Spiegel, welcher Strahlung bei einer ersten Wellenlänge, z.B. bei der Grundfrequenz, transmittiert und Strahlung bei einer zweiten Wellenlänge, z.B. bei der höheren Harmonischen, reflektiert (oder umgekehrt).

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a,b: schematische Darstellungen von zwei Ausführungsformen eines erfindungsgemäßen Laser-Resonators mit einer Zerstreuungslinse zur Kollimation von Laserstrahlung,
- Fign. 2a,b: schematische Darstellungen von zwei weiteren Ausführungsformen des Laser-Resonators mit einer Zerstreuungslinse, bei denen ein Wellenlängenumwandlungskristall im kollimierten Strahlengang angeordnet ist, und
- Fign. 3a,b: schematische Darstellungen von zwei weiteren Ausführungsformen des Laser-Resonators mit einem Wellenlängenumwandlungskristall zur Kollimation von Laserstrahlung.

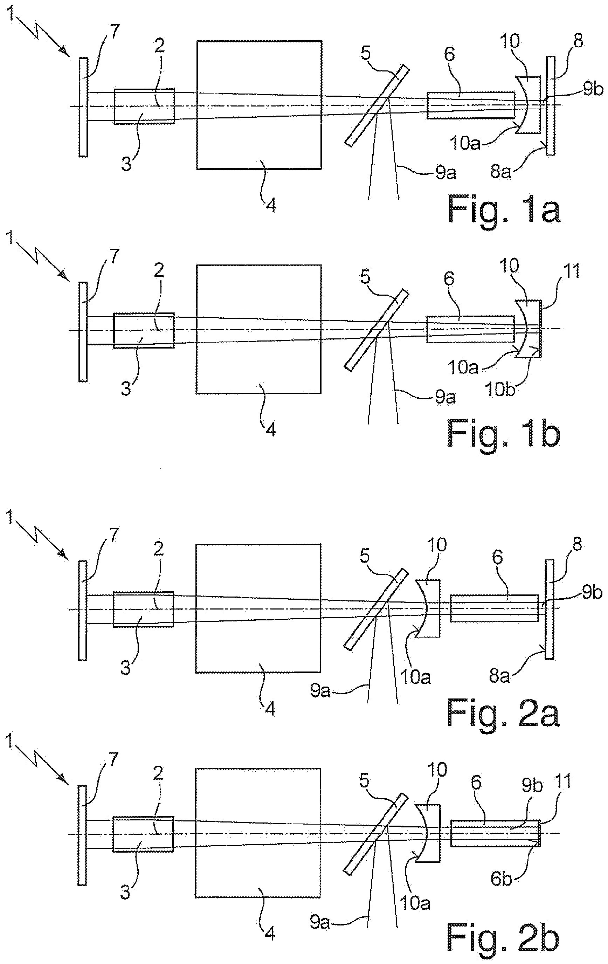

Fig. **1a** zeigt einen Laser-Resonator 1, welcher zwischen zwei planen Endspiegeln 7,8 entlang einer optischen Achse 2 der Reihe nach ein stabförmiges laseraktives Festkörpermedium 3, ein Gütemodulationselement 4, einen Auskoppelspiegel 5 sowie einen Wellenlängenumwandlungskristall 6 aufweist. Die in dem Lasermedium 3 durch eine (nicht gezeigte) Pumplichtquelle mit einer Grundfrequenz angeregte Laserstrahlung wird an dem Wellenlängenumwandlungskristall 6 frequenzkonvertiert und über den dichroitischen Auskoppelspiegel 5, welcher unter 45° zur optischen Achse 2 des Laser-Resonators 1 ausgerichtet ist, als frequenzkonvertierte Laserstrahlung 9a dem Laser-Resonator 1 ausgekoppelt.

Bei dem Lasermedium 3 kann es sich beispielsweise um einen Nd:VY0₄-Kristall oder einen Nd:YAG-Kristall handeln. Der Wellenlängenumwandlungskristall 6 ist ein nichtlinearer Kristall, z.B. in Form eines Lithiumtriborat(LiB₃O₅)-Kristalls, welcher frequenzkanvertierte Laserstrahlung bei der zweiten Harmonischen der Grundfrequenz erzeugt. Als Gütemodulationselement 4 kann ein akusto-optischer Modulator, oder ggf. ein elektro-optischer Modulator, beispielsweise eine Pockels-Zelle verwendet werden.

Um in dem Laser-Resonator 1 eine effiziente Frequenzkonversion zu erhalten, ist es günstig, im nichtlinearen Wellenlängenumwandlungskristall 6 eine möglichst hohe Strahlungsintensität zu erzeugen. Zu diesem Zweck sollte der Wellenlängenumwandlungskristall 6 in einem Bereich des Laser-Resonators 1 angeordnet werden, in dem der Durchmesser des Laserstrahls möglichst gering ist.

Bei dem in Fig. 1 a gezeigten Laser-Resonator 1 ist das Festkörpermedium 3 im Bereich des ersten Endspiegels 7 bzw. benachbart zu diesem angeordnet. Das aktive Festkörpermedium 3 erzeugt hierbei eine thermische Linse, so dass im Bereich des zweiten, weiter vom Lasermedium 3 entfernten Endspiegels 8, der Strahldurchmesser abnimmt. Der Wellenlängenumwandlungskristall 6 sollte daher möglichst nahe an dem zweiten Endspiegei 8 angeordnet werden, um eine möglichst hohe Laserintensität im nichtlinearen Medium zu erhalten.

Allerdings ist es erforderlich, die thermische Linse des Festkörpermediums 3 zu kompensieren, was durch eine Zerstreuungslinse 10 erreicht wird, die zwischen dem Wellenlängenumwandlungskristall 6 und dem zweiten, planen Endspiegel 8 angeordnet ist. Die Zerstreuungslinse 10 weist eine konkav gekrümmte Linsen-Fläche 10a auf, um kollimierte Laserstrahlung 9b mit einem minimalen Strahldurchmesser zu erzeugen. Diese Laserstrahlung 9b trifft auf den planen Endspiegel 8 auf und wird von diesem in sich zurück reflektiert.

Durch die Erzeugung der kollimierten Laserstrahlung 9b kann eine hohe Strahlungsintensität in dem Wellenlängenumwandlungskristall 6 erzeugt werden, ohne dass hierzu die Länge des Laser-Resonators 1 erhöht werden muss. Durch geeignete Wahl der Brennweite der Zerstreuungslinse 10 kann hierbei gleichzeitig eine hohe Strahlqualität der Laserstrahlung in dem Laser-Resonator 1 erhalten werden.

Eine besonders kompakte Ausgestaltung des Laser-Resonators 1 ist in **Fig. 1b** gezeigt. Dort ist an Stelle des zweiten planen Endspiegels 8 eine hochreflektierende Beschichtung 11 auf eine plane Fläche 10b der Zerstreuungslinse 10 aufgebracht. Die reflektierende Beschichtung 11 begrenzt somit den Laser-Resonator 1 endseitig. Dies hat zudem den Vorteil, dass weniger Komponenten, welche sich dejustieren können, im Aufbau enthalten sind und somit der Laser-Resonator 1 stabiler wird.

Um den Wellenlängenumwandlungskristall 6 in einem Bereich mit minimalem Strahldurchmesser anzuordnen, kann alternativ die Zerstreuungslinse 10 auch an der dem Endspiegel 8 abgewandten Seite des Wellenlängenumwandlungskristalls 6 angeordnet werden, wie dies in **Fig**. **2a** dargestellt ist. Der Wellenlängenumwandlungskristall 6 ist in diesem Fall vollständig im kollimierten Strahlengang mit minimalem Strahlquerschnitt angeordnet, so dass die Wellenfängenkonversion besonders effektiv erfolgen kann. Um den Laser-Resonator 1 endseitig zu begrenzen, kann analog zu Fig. 1b eine plane Fläche 6b des Wellenlängenumwandlungskristalls 6 mit einer reflektierenden Beschichtung 11 versehen werden, so dass auf den Endspiegel 8 verzichtet werden kann (vgl. **Fig**. **2b**).

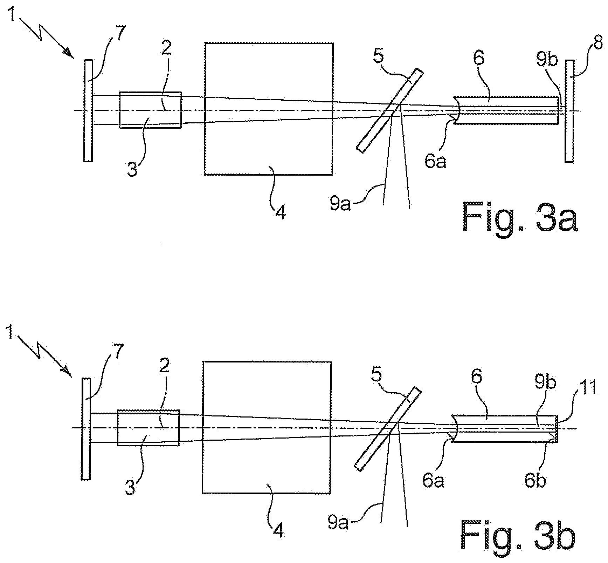

Alternativ kann auch der Wellenlängenumwandlungskristall 6 selbst mit einer konkav gekrümmten (Linsen-)fläche 6a versehen werden, um kollimierte Laserstrahlung 9b zu erzeugen, wie dies in **Fig. 3a** gezeigt ist. Auf diese Weise kann erreicht werden, dass die Laserstrahlung über die gesamte Länge des Wellenlängenumwandlungskristalls 6 einen minimalen Strahlquerschnitt und damit eine maximale Strahlungsintensität aufweist, so dass die Wellenlängenkonversion besonders effektiv durchgeführt werden kann.

Auch bei dem in Fig. 3a gezeigten Beispiel des Laser-Resonators 1 kann der zweite Endspiegel 8 durch eine hochreflektive Beschichtung 11 an einer planen Endfläche 6b des Wellenlängenumwandlungskristalls 6 ersetzt werden, wie dies in **Fig. 3b** dargestellt ist. Wie in Fig. 1b kann auf diese Weise der Laser-Resonator 1 in einer besonders kompakten Bauform realisiert werden.

Es versteht sich, dass an Stelle eines einzigen laseraktiven Festkörpermediums 3 auch zwei oder mehr laseraktive Festkörpermedien in dem Laser-Resonator vorgesehen werden können. In diesem Fall kann beispielsweise zusätzlich ein Phasenanpassungselement in dem Laser-Resonator angeordnet werden, welches die Polarisationsebene z.B. um 90° dreht, um die Doppelbrechung der Festkörpermedien zu kompensieren. Auch können zusätzliche optische Elemente, z.B. Faltungsspiegel, im Laser-Resonator 1 angeordnet sein.

## Patentansprüche

1. Laser-Resonator (1) zur Erzeugung von frequenzkonvertierter Laserstrahlung (9a), umfassend:
ein laseraktives Festkörpermedium (3) sowie
einen Wellenlängenumwandlungskristall (6), wobei
in dem Laser-Resonator (1) ein transmissives optisches Element (6, 10) mit einer konkav gekrümmten Fläche (6a, 10a) zur Erzeugung von kollimierter Laserstrahlung (9a) angeordnet ist,
**dadurch gekennzeichnet,**
**dass** das transmissive optische Element (6, 10) benachbart zu einem planen Endspiegel (8) des Laser-Resonators (1) angeordnet ist, oder
**dass** eine weitere, plane Fläche (6b, 10b) des transmissiven optischen Elements (6, 10) eine reflektierende Beschichtung (11) aufweist, die den Laser-Resonator (1) endseitig begrenzt.

2. Laser-Resonator nach einem der vorhergehenden Ansprüche, bei dem das transmissive optische Element eine Zerstreuungslinse (10) ist.

3. Laser-Resonator nach Anspruch 2, bei dem die Zerstreuungslinse (10) zwischen dem laseraktiven Festkörpermedium (3) und dem Wellenlängenumwandlungskristall (6) angeordnet ist.

4. Laser-Resonator nach Anspruch 1, bei dem das transmissive optische Element der Wellenlängenumwandlungskristall (6) ist.

5. Laser-Resonator nach einem der vorhergehenden Ansprüche, weiter umfassend:
einen planen Endspiegel (7), der benachbart zu dem laseraktiven Festkörpermedium (3) angeordnet ist.

6. Laser-Resonator nach einem der vorhergehenden Ansprüche, weiter umfassend:
ein Gütemodulationselement (4).

7. Laser-Resonator nach einem der vorhergehenden Ansprüche, weiter umfassend:
einen Auskoppelspiegel (5) zum Auskoppeln der frequenzkonvertierten Laserstrahlung (9a) aus dem Laser-Resonator (1).

## Claims

1. A laser resonator (1) for generating frequency-converted laser radiation (9a), comprising:
a laser-active solid-state medium (3) and
a wavelength conversion crystal (6), wherein
a transmissive optical element (6, 10) having a concavely curved surface (6a, 10a) for generating collimated laser radiation (9a) is arranged in the laser resonator (1),
**characterized in that**
the transmissive optical element (6, 10) is arranged adjacent to a planar end mirror (8) of the laser resonator (1), or
a further, planar surface (6b, 10b) of the transmissive optical element (6, 10) has a reflective coating (11) delimiting the laser resonator (1) on the end side.

2. The laser resonator as claimed in any of the preceding claims, wherein the transmissive optical element is a diverging lens (10).

3. The laser resonator as claimed in claim 2, wherein the diverging lens (10) is arranged between the laser-active solid-state medium (3) and the wavelength conversion crystal (6).

4. The laser resonator as claimed in claim 1, wherein the transmissive optical element is the wavelength conversion crystal (6).

5. The laser resonator as claimed in any of the preceding claims, further comprising:
a planar end mirror (7) arranged adjacent to the laser-active solid-state medium (3).

6. The laser resonator as claimed in any of the preceding claims, further comprising:
a quality modulation element (4).

7. The laser resonator as claimed in any of the preceding claims, further comprising:
a coupling-out mirror (5) for coupling out the frequency-converted laser radiation (9a) from the laser resonator (1).

## Revendications

1. Résonateur laser (1) pour la production d'un rayonnement laser converti en fréquence (9a), comprenant :
un milieu actif laser solide (3) ainsi
qu'un cristal convertisseur de longueur d'onde (6),
un élément optique transmissif (6, 10) présentant une surface à courbure concave (6a, 10a) pour produire un rayonnement laser collimaté (9a) étant disposé dans le résonateur laser (1),
**caractérisé en ce**
**que** l'élément optique transmissif (6, 10) est disposé au voisinage d'un miroir d'extrémité plan (8) du résonateur laser (1), ou
**qu'**une autre surface plane (6b, 10b) de l'élément optique transmissif (6, 10) présente un revêtement réfléchissant (11) qui limite le résonateur laser (1) à une extrémité.

2. Résonateur laser selon l'une des revendications précédentes, dans lequel l'élément optique transmissif est une lentille divergente (10).

3. Résonateur laser selon la revendication 2, dans lequel la lentille divergente (10) est disposée entre le milieu actif laser solide (3) et le cristal convertisseur de longueur d'onde (6).

4. Résonateur laser selon la revendication 1, dans lequel l'élément optique transmissif est le cristal convertisseur de longueur d'onde (6).

5. Résonateur laser selon l'une des revendications précédentes, comprenant en outre :
un miroir d'extrémité plan (7) qui est disposé au voisinage du milieu actif laser solide (3).

6. Résonateur laser selon l'une des revendications précédentes, comprenant en outre :
un élément modulateur de qualité (4).

7. Résonateur laser selon l'une des revendications précédentes, comprenant en outre :
un miroir de sortie (5) pour extraire le rayonnement laser converti en fréquence (9a) du résonateur laser (1).
